# EUROPÄISCHE PATENTSCHRIFT

(11) **EP 3 592 589 B1**
(45) Veröffentlichungstag und Bekanntmachung des Hinweises auf die Patenterteilung: **06.01.2021**
(21) Anmeldenummer: 18705819.3
(22) Anmeldetag: 06.02.2018
(51) Int. Cl.: B60K 6/48, B60K 6/405

(54) **HYBRIDMODUL MIT INTEGRIERTER SENSOREINRICHTUNG SOWIE HYBRIDANTRIEBSSTRANG MIT HYBRIDMODUL**
HYBRID MODULE WITH INTEGRATED SENSOR DEVICE, AND HYBRID POWERTRAIN COMPRISING A HYBRID MODULE
MODULE HYBRIDE À DISPOSITIF DE DÉTECTION INTÉGRÉ AINSI QUE CHAÎNE DE TRACTION HYBRIDE DOTÉE D'UN MODULE HYBRIDE

(30) Priorität: 06.03.2017 DE 102017104562; 08.12.2017 DE 102017129269
(43) Veröffentlichungstag der Anmeldung: 15.01.2020
(73) Patentinhaber: Schaeffler Technologies AG & Co. KG, 91074 Herzogenaurach (DE)
(72) Erfinder: HOPPE, Marcus, 77855 Achern (DE); PIEPER, Torsten, 76137 Karlsruhe (DE); VORNEHM, Martin, 77815 Bühl (DE)
(86) Internationale Anmeldenummer: PCT/DE2018/100094
(87) Internationale Veröffentlichungsnummer: WO 2018/161990

(56) Entgegenhaltungen:
- EP-A1- 2 199 136
- WO-A1-2015/015276
- DE-A1- 10 044 232
- US-A1- 2005 206 349
- US-A1- 2010 069 192

## Beschreibung

Die Erfindung betrifft ein Hybridmodul für einen (hybriden) Antriebsstrang eines Kraftfahrzeuges, wie eines Pkws, Lkws, Busses oder sonstigen Nutzfahrzeuges, mit einem Gehäuse, einer Trennkupplung sowie einer Zwischenwelle, wobei ein mit einer elektrischen Maschine gekoppelter oder koppelbarer Drehbestandteil der Trennkupplung drehfest mit der Zwischenwelle verbunden ist und die Zwischenwelle relativ zu dem Gehäuse mittels zweier Stützlager um eine Drehachse rotierbar gelagert ist. Zudem betrifft die Erfindung einen Hybridantriebsstrang mit dem Hybridmodul.

Gattungsgemäßer Stand der Technik ist bereits hinlänglich bekannt. Beispielsweise offenbart die WO 2016/070 878 A1 ein Hybridmodul für einen Antriebsstrang eines Kraftfahrzeuges, mit einem elektrischen Antriebsmotor, der in dem Hybridmodul integriert ist. Weiterer gattungsgemäßer Stand der Technik nach dem Oberbegriff von Anspruch 1 ist in der US 2005/206349 A1 und der US 2010/069192 A1 gezeigt.

Des Weiteren ist es bekannt, die Betriebszustände der elektrischen Maschinen dieser Hybridmodule zu überwachen. Dafür ist es prinzipiell möglich, verschiedene Sensoreinrichtungen heranzuziehen, um bspw. die Drehzahl oder eine Position eines Rotors der elektrischen Maschine zu erfassen.

Ein Nachteil bekannter Hybridmodule besteht jedoch darin, dass relativ viel Bauraum durch die Sensorik der Sensoreinrichtungen eingenommen wird. Dieser Nachteil wird durch die bisher umgesetzte Anordnung der Sensoreinrichtungen verstärkt.

Es ist daher die Aufgabe der vorliegenden Erfindung, diese aus dem Stand der Technik bekannten Nachteile zu beheben und insbesondere ein Hybridmodul zur Verfügung zu stellen, das einerseits den derzeit anstehenden Entwicklungen hinsichtlich der Industrie 4.0 zur Überwachung von Systemen Schritt hält, andererseits die immer beschränkteren Bauraumvorgaben einhält.

Dies wird erfindungsgemäß mit den Merkmalen des Anspruchs 1 gelöst. Die Stützlager sind derart in axialer Richtung, d.h. entlang der Drehachse, beabstandet zueinander angeordnet sind, dass axial zwischen ihnen ein Aufnahmeraum gebildet ist, wobei in dem Aufnahmeraum zumindest ein Teil einer Sensoreinrichtung angeordnet / untergebracht / positioniert ist.

Durch das geschickte Ausnutzen dieses ohnehin vorhandenen Bauraums sind bestehende Hybridmodule ohne Sensoreinrichtung einfach adaptierbar, ohne dass zwingend zusätzlicher Bauraum zur Verfügung gestellt werden muss. Eine möglichst kompakte Ausbildung eines Hybridmoduls, das dennoch ausreichend überwachbar ist, ist somit geschaffen.

Erfindungsgemäß ist außerdem vorgesehen, dass das Gehäuse eine in radialer Richtung verlaufende Zwischenwand aufweist und an einer radialen Innenseite der Zwischenwand die beiden Stützlager aufgenommen / gehalten sind. Insbesondere ist an der radialen Innenseite der Zwischenwand jeweils ein Lageraußenring des jeweiligen Stützlagers aufgenommen / gehalten. Dadurch sind die Stützlager besonders solide aufgenommen.

Zudem ist es erfindungsgemäß vorgesehen, dass die Zwischenwand einen radial innerhalb mehrerer Reibelemente der Trennkupplung angeordneten Hülsenbereich aufweist, wobei an einer radialen Innenseite des Hülsenbereiches (vorzugsweise unmittelbar) die Stützlager aufgenommen sind.

Der Hülsenbereich schließt sich weiter bevorzugt in radialer Richtung innerhalb eines sich radial erstreckenden Scheibenbereichs der Zwischenwand an. Der Scheibenbereich an sich ist axial versetzt zu der Trennkupplung / zu Reibelementen der Trennkupplung angeordnet. Dadurch wird die Bauraumnutzung weiter optimiert.

Weitere vorteilhafte Ausführungsformen sind mit den Unteransprüchen beansprucht und nachfolgend näher erläutert

Die Stützlager sind vorteilhafterweise unmittelbar oder mittelbar an einer radialen Außenseite der als Hohlwelle oder Vollwelle ausgebildeten Zwischenwelle angeordnet.

Hinsichtlich der Sensoreinrichtung ist es weiterhin zweckmäßig, wenn diese zumindest einen Sensor, weiter bevorzugt mehrere Sensoren, aufweist, welcher / welche Sensor/-en in dem Aufnahmeraum angeordnet ist / sind. Dadurch ist der Aufbau der Sensoreinrichtung besonders einfach gehalten.

Von Vorteil ist es, wenn der zumindest eine Sensor zum Erfassen einer Drehzahl (/Drehgeschwindigkeit), einer Temperatur, eines Drehmoments und/oder einer Position, vorzugsweise einer Winkellage, ausgebildet ist. Vorzugsweise ist der Sensor als ein Resolver ausgebildet. Dadurch ist ein besonders kompakt ausgebildeter Sensor in dem Aufnahmeraum integriert.

Der zumindest eine Sensor ist mittels einer kabellosen Verbindung oder weiter bevorzugt mittels einer kabelgebundenen Verbindung mit einer Auswerteeinheit der Sensoreinrichtung (datenübertragend) verbunden / gekoppelt.

Gemäß einer besonders bevorzugten Ausführung sind mehrere Sensoren in Form von Temperatursensoren der Sensoreinrichtung in dem Aufnahmeraum vorgesehen. Jeder Temperatursensor kontaktiert dabei bevorzugt einen Lagerring eines der Stützlager, sodass er die Temperatur des jeweiligen Lagerrings erfasst. Gemäß einer weiter bevorzugten Ausführung ist der zumindest eine Sensor als ein Drehzahlsensor / Drehwinkelsensor, etwa in Form eines Resolvers, ausgebildet. Der Drehzahlsensor / Drehwinkelsensor ist fest mit dem Gehäuse verbunden und wirkt mit einem drehfest mit der Zwischenwelle verbundenen Geber zusammen.

Die Stützlager weisen weiter bevorzugt unterschiedliche Durchmesser auf und sind weiter bevorzugt an unterschiedlichen Stufen / Absätzen der Zwischenwelle angeordnet.

Ist ein zum Betätigen der Trennkupplung eingesetzter Nehmerzylinder, vorzugsweise in Form eines konzentrischen Nehmerzylinders (CSC) ausgebildet, radial zwischen den Stützlagern und mehreren Reibelementen der Trennkupplung positioniert, wird der vorhandene Bauraum noch intensiver genutzt.

Zudem betrifft die Erfindung einen Hybridantriebsstrang für ein Kraftfahrzeug, mit dem erfindungsgemäßen Hybridmodul nach zumindest einer der zuvor beschriebenen Ausführungen.

In anderen Worten ausgedrückt, ist somit erfindungsgemäß eine Sensorik (Sensoreinrichtung) bei einem vorzugsweise als P2-Hybridsystem ausgebildeten Hybridmodul integriert. Erfindungsgemäß ist ein Sensorsystem (Sensoreinrichtung; vorzugsweise zur Erfassung einer Geschwindigkeit / Drehzahl, einer Temperatur, eines Drehmoments, einer Position oder ähnlichem) zwischen zwei Stützlagern einer Zwischenwelle angeordnet.

Die Erfindung wird nun nachfolgend anhand von Figuren in Verbindung mit unterschiedlichen Ausführungsbeispielen näher beschrieben.

Es zeigen:
- Fig. 1: eine Längsschnittdarstellung eines erfindungsgemäßen Hybridmoduls nach einem ersten Ausführungsbeispiel, wobei das Hybridmodul mit einem parallel zu einer Drehachse einer Trennkupplung angeordneten Elektromotor ausgestattet ist und der innere Aufbau des Hybridmoduls zu erkennen ist, wobei eine vorhandene Sensoreinrichtung des Hybridmoduls schematisch dargestellt ist,
- Fig. 2: eine Längsschnittdarstellung des Hybridmoduls nach Fig. 1 im Bereich der Trennkupplung, einer Zwischenwelle sowie eines zwischen zwei Stützlagern ausgebildeten Aufnahmeraums zur Aufnahme der Sensoreinrichtung,
- Fig. 3: eine Längsschnittdarstellung des teilweise abgebildeten Hybridmoduls, ähnlich zu Fig. 2, wobei die Sensoreinrichtung gemäß einer ersten Variante mit mehreren Temperatursensoren ausgestattet ist,

- Fig. 4: eine Längsschnittdarstellung des teilweise abgebildeten Hybridmoduls, ähnlich zu Fig. 2, wobei die Sensoreinrichtung gemäß einer zweiten Variante mit einem Drehzahlsensor ausgestattet ist und der Drehzahlsensor mit seinem Messbereich in radialer Richtung nach innen ausgerichtet ist,
- Fig. 5: eine Längsschnittdarstellung des teilweise abgebildeten Hybridmoduls, ähnlich zu Fig. 2, wobei die Sensoreinrichtung gemäß einer dritten Variante als Drehzahlsensor ausgebildet ist, mit seinem Messbereich in axialer Richtung ausgerichtet ist,
- Fig. 6: eine Längsschnittdarstellung eines erfindungsgemäßen Hybridmoduls nach einem zweiten Ausführungsbeispiel, wobei die Zwischenwelle zweiteilig ausgebildet ist,
- Fig. 7: eine perspektivische Darstellung des in Fig. 6 in Längsrichtung geschnittenen Hybridmoduls, und
- Fig. 8: eine Längsschnittdarstellung eines erfindungsgemäßen Hybridmoduls nach einem dritten Ausführungsbeispiel, wobei die elektrische Maschine nun koaxial zu der Drehachse der Trennkupplung angeordnet ist.

Die Figuren sind lediglich schematischer Natur und dienen ausschließlich dem Verständnis der Erfindung. Die gleichen Elemente sind mit denselben Bezugszeichen versehen. Des Weiteren sind die unterschiedlichen Merkmale der verschiedenen Ausführungsbeispiele frei miteinander kombinierbar. Hinsichtlich der nachfolgend näher beschriebenen unterschiedlichen Ausführungsbeispiele sei darauf hingewiesen, dass die Ausführungsbeispiele allesamt prinzipiell gemäß dem ersten Ausführungsbeispiel aufgebaut sind sowie funktionieren, sodass der Kürze wegen lediglich die Unterschiede zu dem ersten Ausführungsbeispiel beschrieben sind.

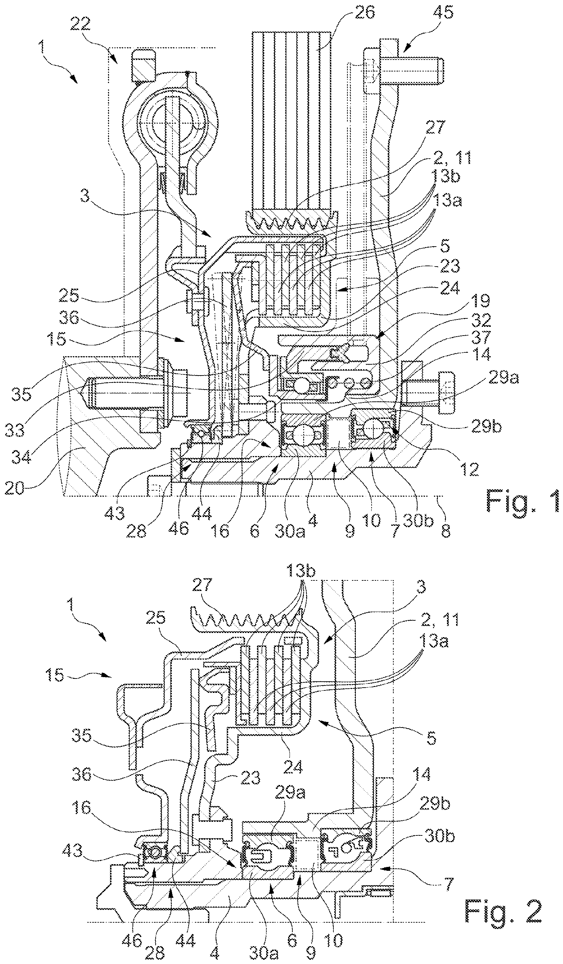

In der Verbindung mit Fig. 1 ist das erfindungsgemäße Hybridmodul 1 gemäß einem ersten Ausführungsbeispiel im Aufbau besonders gut erkennbar. Das Hybridmodul 1 ist im Betrieb Bestandteil eines Hybridantriebsstranges eines Kraftfahrzeuges. Das Hybridmodul 1 ist dann vorzugsweise, entlang des Drehmomentübertragungspfades betrachtet, zwischen einer Ausgangswelle 20 einer Verbrennungskraftmaschine und einem Getriebe eingesetzt. Das Hybridmodul 1 weist auf typische Weise eine Kupplungseinrichtung bestehend aus zumindest einer, vorzugsweise mehreren Teilkupplungen, wovon der Übersichtlichkeit halber lediglich eine (erste) Trennkupplung 3 dargestellt ist, auf. Die (erste) Trennkupplung 3 dient zum wahlweisen drehfesten Koppeln der Ausgangswelle 20 mit einer Zwischenwelle 4 des Hybridmoduls 1. Auch weist das Hybridmodul 1 auf typische Weise eine elektrische Maschine / einen Elektromotor auf. Die elektrische Maschine ist in dieser Ausführung achsparallel, d.h. mit einer Drehachse ihres Rotors parallel zu einer Drehachse 8 der Zwischenwelle 4 / der Ausgangswelle 20 (Kurbelwelle) angeordnet. Die elektrische Maschine ist in diesem Ausführungsbeispiel Bestandteil des Hybridmoduls 1, kann jedoch prinzipiell auch als ein vom Hybridmodul 1 separater Bestandteil betrachtet werden.

Das Hybridmodul 1 des ersten Ausführungsbeispiels weist zu einer der Ausgangswelle 20 zugewandten Seite hin einen Drehschwingungsdämpfer in Form eines Zweimassenschwungrades 22 auf. Das Zweimassenschwungrad 22 ist in Fig. 1 bereits drehfest mit der Ausgangswelle 20 verbunden. Das Zweimassenschwungrad 22 ist eingangsseitig mit der Ausgangswelle 20 verbunden. Ausgangsseitig ist das Zweimassenschwungrad 22 drehfest mit einem Drehbestandteil 15, nachfolgend als zweiter Drehbestandteil 15 bezeichnet, der ersten Trennkupplung 3 drehfest verbunden.

Die erste Trennkupplung 3 ist als eine Reibungskupplung ausgeführt. Die erste Trennkupplung 3 ist in diesem Ausführungsbeispiel als trockene Kupplung ausgeführt, kann jedoch prinzipiell auch als nass laufende Kupplung ausgeführt sein. Ein neben dem zweiten Drehbestandteil 15 vorgesehener erster Drehbestandteil 5 der ersten Trennkupplung 3 wirkt über mehrere Reibelemente 13a und 13b mit dem zweiten Drehbestandteil 15 zusammen. Die beiden Drehbestandteile 5, 15 sind in einer eingekuppelten Stellung der ersten Trennkupplung 3 seitens ihrer Reibelemente 13a, 13b auf typische Weise reibkraftschlüssig miteinander verbunden. In einer ausgekuppelten Stellung der ersten Trennkupplung 3 sind die Reibelemente 13a und 13b und somit die Drehbestanteile 5, 15 frei relativ zueinander verdrehbar angeordnet. Die beiden Drehbestandteile 5, 15 sind um eine zentrale Drehachse 8 der Trennkupplung 3 / des Hybridmoduls 1 drehbar angeordnet.

Insbesondere ist die erste Trennkupplung 3 als eine Reiblamellenkupplung ausgestaltet. Somit weist jeder Drehbestandteil 5, 15 mehrere Reibelemente 13a, 13b in Form von Reiblamellen auf. Der erste Drehbestandteil 5 weist einen, als Innenträger / Innenlamellenträger ausgebildeten, ersten Träger 23 auf. An diesem ersten Träger 23, nämlich an einem hülsenförmigen Tragbereich 24 des ersten Trägers 23, sind mehrere erste Reibelemente 13a drehfest aufgenommen. Die ersten Reibelemente 13a sind zudem in axialer Richtung relativ zueinander verschiebbar an dem Tragbereich 24 des ersten Trägers 23 aufgenommen. Hierzu weist der erste Träger 23 eine ausgeformte Verzahnung auf, auf der die ersten Reibelemente 13a drehfest sowie axial verschiebbar aufgenommen sind. Zwischen je zwei benachbarten ersten Reibelementen 13a ist ein zweites Reibelement 13b des zweiten Drehbestandteils 15 angeordnet. Der zweite Drehbestandteil 15 weist einen zweiten Träger 25 in Form eines Außenträgers / Außenlamellenträgers auf, der die zweiten Reibelemente 13b drehfest sowie relativ zueinander axial verschiebbar aufnimmt.

Mit dem ersten Drehbestandteil 5 der Trennkupplung 3 ist zudem der hier der Übersichtlichkeit halber nicht weiter dargestellte Rotor der elektrischen Maschine antreibend gekoppelt. Hierzu ist der Rotor seitens seiner Rotorwelle über ein Zugmittel 26 (hier Riemen, alternativ auch Kette, etc.) mit dem ersten Drehbestandteil 5 gekoppelt. Der erste Drehbestandteil 5 weist einen Zugmittelaufnahmebereich 27 auf, der das Zugmittel 26 form- und/oder kraftschlüssig aufnimmt. Bewährt hat sich beispielsweise der Einsatz von Ketten an dieser Stelle. Der Aufnahmebereich 27 ist radial außerhalb des Tragbereiches 24 sowie der Reibelemente 13a, 13b angeordnet. Der erste Träger 23 bildet somit auch einen Rotor- / Riemenscheiben-Träger aus.

Der erste Drehbestandteil 5 ist, seitens seines ersten Trägers 23, mit einer Zwischenwelle 4, die wiederum um die Drehachse 8 drehbar gelagert ist, drehverbunden. In diesem Ausführungsbeispiel dient eine Kerbverzahnung 28 zur drehfesten Verbindung zwischen dem ersten Träger 23 und der Zwischenwelle 4. Die Zwischenwelle 4 dient im Betrieb auf typische Weise zur Verbindung des ersten Drehbestandteils 5 mit einer weiteren Teilkupplung der Kupplungseinrichtung, wie bevorzugt mit einer Teilkupplung einer Doppelkupplung des Hybridmoduls 1.

Die Zwischenwelle 4 ist relativ zu einem Gehäuse 2 des Hybridmoduls 1 drehbar gelagert. Zu diesem Zwecke sind zwei entlang der Drehachse 8 / in axialer Richtung beabstandet zueinander angeordnete Stützlager 6, 7 vorgesehen. Ein erstes Stützlager 6 ist in axialer Richtung näher zu dem Zweimassenschwungrad 22 hin angeordnet als ein zweites Stützlager 7. Beide Stützlager 6, 7 sind als Kugellager ausgeführt. Das zweite Stützlager 7 ist als ein Schrägkugellager ausgeführt. Die beiden Stützlager 6, 7 sind an einer Zwischenwand 11 des Gehäuses 2 aufgenommen. Hierfür bildet die Zwischenwand 11 einen sich in axialer Richtung erstreckenden Hülsenbereich 14 aus, an dessen radialer Innenseite 12 die beiden Stützlager 6, 7 aufgenommen sind. Das jeweilige Stützlager 6, 7 ist mit einem Lageraußenring 29a, 29b an diesem Hülsenbereich 14 / an der Zwischenwand 11 gehalten.

Die Stützlager 6, 7 weisen einen unterschiedlichen Durchmesser auf. Der Hülsenbereich 14 ist folglich gestuft ausgebildet ist. An einer ersten Stufe ist das erste Stützlager 6 mit seinem Lageraußenring 29a aufgenommen; an einer gegenüber dieser ersten Stufe radial nach außen erweiterten zweiten Stufe ist das zweite Stützlager 7 mit seinem Lageraußenring 29b aufgenommen. Dem entsprechend sind die Stützlager 6, 7 auch an zwei unterschiedlichen Stufen der Zwischenwelle 4 aufgenommen. Eine erste Stufe der Zwischenwelle 4 dient zur Aufnahme des ersten Stützlagers 6 / eines Lagerinnenrings 30a des ersten Stützlagers 6 und ist radial kleiner dimensioniert als eine zweite Stufe, die zur Aufnahme des zweiten Stützlagers 7 / eines Lagerinnenrings 30b des zweiten Stützlagers 7 dient.

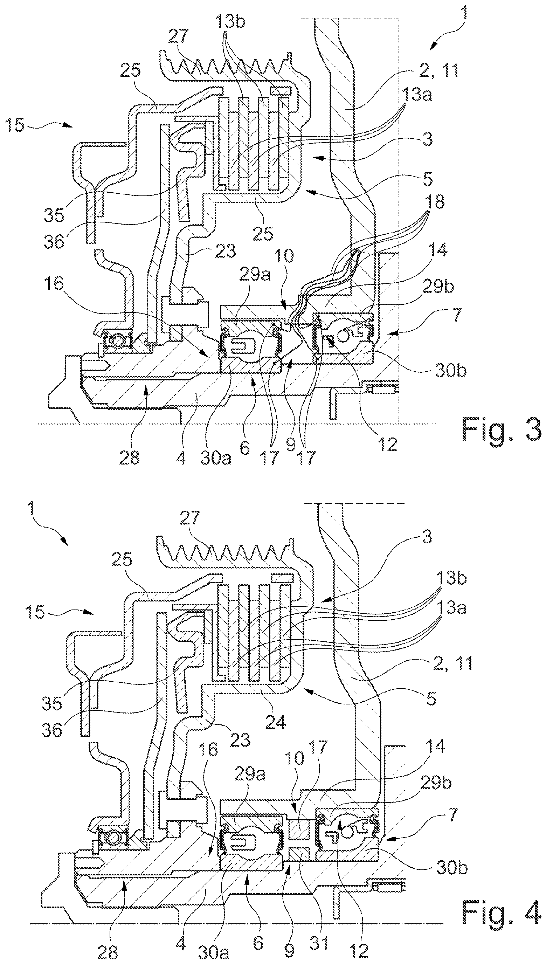

Erfindungsgemäß ist nun in axialer Richtung zwischen den beiden Stützlagern 6, 7 ein Aufnahmeraum 9 zur Aufnahme von Bestandteilen einer Sensoreinrichtung 10 ausgebildet. Dies ist auch besonders gut in Fig. 2 ersichtlich. In Verbindung mit den Fign. 3 bis 5 sind in diesem Zusammenhang unterschiedliche Sensoren 17 der Sensoreinrichtung 10 zum Anbringen in diesem Aufnahmeraum 9 dargestellt.

In Fig. 3 sind mehrere Sensoren 17 der Sensoreinrichtung 10 in dem Aufnahmeraum 9 angeordnet. Die Sensoren 17 sind jeweils als Temperatursensoren ausgestaltet. Die Sensoren 17 sind jeweils mit einem der Lagerringe 29a, 29b, 30a, 30b verbunden. Somit ist ein einzelner (erster) Sensor 17 an dem Lageraußenring 29a des ersten Stützlagers 6 kontaktierend angebracht. Ein weiterer (zweiter) einzelner Sensor 17 ist an dem Lageraußenring 29b des zweiten Stützlagers 7 kontaktierend angebracht. Ein weiterer (dritter) Sensor 17 ist kontaktierend an dem Lagerinnenring 30a des ersten Stützlagers 6 angebracht. Ein weiterer (vierter) Sensor 17 ist an dem Lagerinnenring 30b des zweiten Stützlagers 7 kontaktierend angebracht. Der jeweilige Sensor 17 ist in diesem Ausführungsbeispiel über eine kabelgebundene Verbindung, die hier abschnittsweise seitens eines Kabels 18 angedeutet ist, mit einer Auswerteeinheit der Sensoreinrichtung 10 weiter datenübermittelnd und energieübertragend verbunden. Die Auswerteeinheit ist der Übersichtlichkeit halber nicht weiter dargestellt. Die kabelgebundene Verbindung durchdringt die Zwischenwand 11 in Bezug auf die Drehachse 8 bevorzugt in radialer Richtung und/oder zumindest teilweise in axialer Richtung.

In Fig. 4 ist lediglich ein einziger Sensor 17 der Sensoreinrichtung 10 in dem Aufnahmeraum 9 angeordnet. Der Sensor 17 ist in Fig. 4 als ein Drehzahlsensor ausgestaltet. Der Sensor 17 wirkt mit einem Geber 31 zusammen, wobei der Geber 31 einen durch den Sensor 17 messtechnisch erfassbaren Bestandteil ausbildet. Der Geber 31 ist radial innerhalb des Sensors 17 angeordnet. Der Sensor 17 ist fest an der Zwischenwand 11 / dem Gehäuse 2 angebracht. Der Sensor 17 ist mit seinem Messbereich in radialer Richtung nach innen auf den Geber 31 gerichtet. Der Geber 31 ist drehfest mit der Zwischenwelle 4 verbunden. Der Geber 31 ist an einer Außenseite 16 der Zwischenwelle 4 angebracht. Dadurch kann insbesondere eine Drehzahl / Drehgeschwindigkeit der Zwischenwelle 4 erfasst werden. Der Geber 31 ist zudem als ein Geberrad ausgebildet. Der Geber 31 weist somit mehrere um den Umfang verteilte Nasen / Erhebungen auf, die auch eine Erfassung der (Winkel-)Position / Winkellage der Zwischenwelle 4 im Betrieb ermöglichen. Durch die Drehverbindung mit dem Rotor kann auch auf eine Drehzahl / Drehgeschwindigkeit und Position des Rotors rückgeschlossen werden.

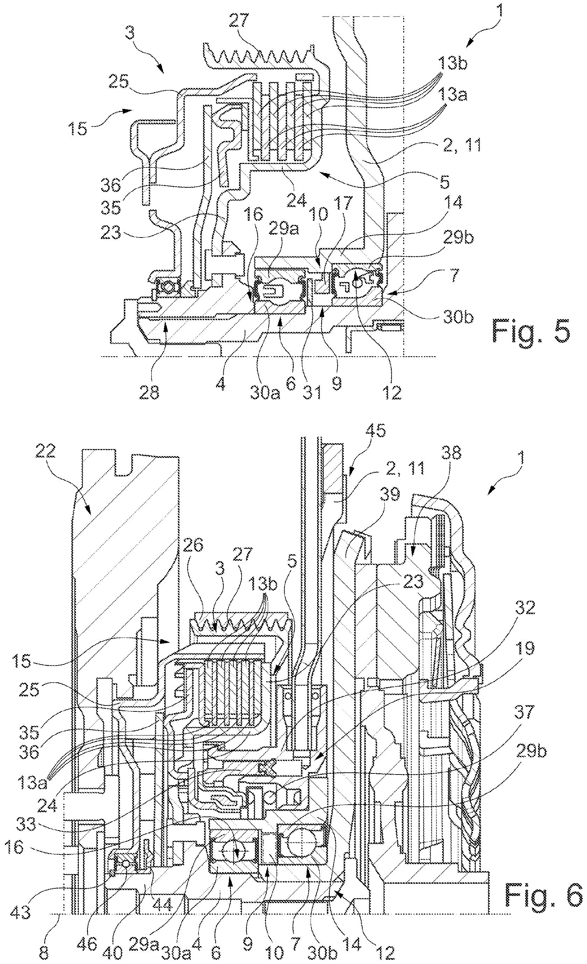

In Verbindung mit Fig. 5 ist wie in Fig. 4 ein einziger Sensor 17 der Sensoreinrichtung 10 in Form eines Drehzahlsensors umgesetzt. Der Sensor 17 der in Fig. 5 dargestellten Variante unterscheidet sich von dem Sensor 17 der in Fig. 4 dargestellten Variante dadurch, dass sein Messbereich in axialer Richtung ausgerichtet ist. Der Geber 31 überragt den Sensor 17 in einem bestimmten Überlappungsbereich in radialer Richtung, sodass der Sensor 17 wiederum die Erhebungen des Gebers 31 in Form des Geberrades erfassen kann.

Wie in Fig. 1 weiterhin zu erkennen, ist die erste Trennkupplung 3 mittels eines Nehmerzylinders 19 betätigbar. Der Nehmerzylinder 19 ist als ein konzentrischer (ringförmiger) Nehmerzylinder 19 (CSC) ausgeführt. Der Nehmerzylinder 19 ist gehäusefest, nämlich seitens der Zwischenwand 11 fest, aufgenommen. Der Nehmerzylinder 19 weist ein Zylindergehäuse 23 auf, das auf einer radialen Außenseite des Hülsenbereichs 14 angeordnet und befestigt ist. In dem Zylindergehäuse 32 ist ein (ringförmiger) Kolben 33 verschiebbar aufgenommen. Eine Vorlastfeder 37 beaufschlagt den Kolben 33 in einer axialen Richtung. Der Kolben 33 wirkt weiter mit einem Betätigungslager 34 und dieses Betätigungslager 34 wiederum mit einem Drucktopf 35 zusammen. Der Drucktopf 35 ist, aufgrund der Ausbildung der ersten Trennkupplung 3 als normal geschlossene / normal eingerückte Kupplung, durch eine Tellerfeder 36 so vorgespannt, dass er in einem unbetätigten Zustand des Nehmerzylinders 19 die erste Trennkupplung 3 durch Aneinanderdrücken der Reibelemente 13a, 13b in ihre eingekuppelte Stellung zwingt. Der Nehmerzylinder 19 ist daher als ein Ausrücker / Ausrücksystem umgesetzt. Die Tellerfeder 36 ist in Fig. 1 in weiteren Schwenkpositionen gestrichelt veranschaulicht. Die Tellerfeder 36 an sich ist im Bereich ihres Schwenkpunktes axial mit dem ersten Drehbestandteil 5 fest verbunden / an diesem axial fest abgestützt. Somit ist die Tellerfeder 36 relativ zu dem ersten Drehbestandteil 5 in axialer Richtung verspannt. Gegebenenfalls kann auch eine Modulationsfeder zusätzlich vorhanden sein.

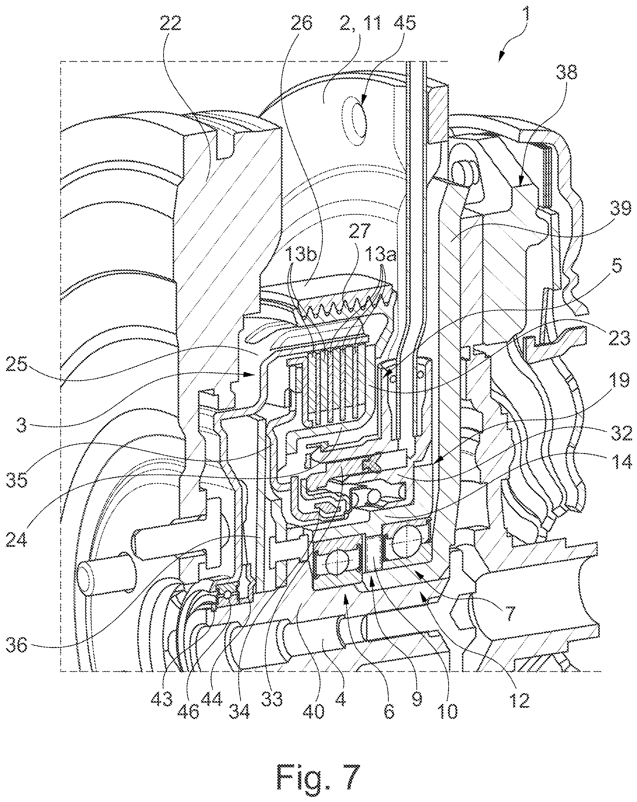

In Verbindung mit den Fign. 6 und 7 ist ein weiteres zweites Ausführungsbeispiel des erfindungsgemäßen Hybridmoduls 1 veranschaulicht. Wie hierbei zu erkennen, ist es prinzipiell auch möglich, die Zwischenwelle 4 mehrteilig auszubilden. Die Zwischenwelle 4 bildet ein Schwungrad / eine Gegendruckplatte 39 einer weiteren Kupplung 38 / Teilkupplung der Kupplungseinrichtung mit aus. Die Gegendruckplatte 39 ist drehfest mit einem rohrförmigen Bestandteil / Grundkörper 40 der Zwischenwelle 4 verbunden. Zudem ist der Drehschwingungsdämpfer hier in Form eines Einmassenschwungrades ausgebildet. Auch ist der erste Träger 23 mit einer Vernietung mit der Zwischenwelle 4 verbunden.

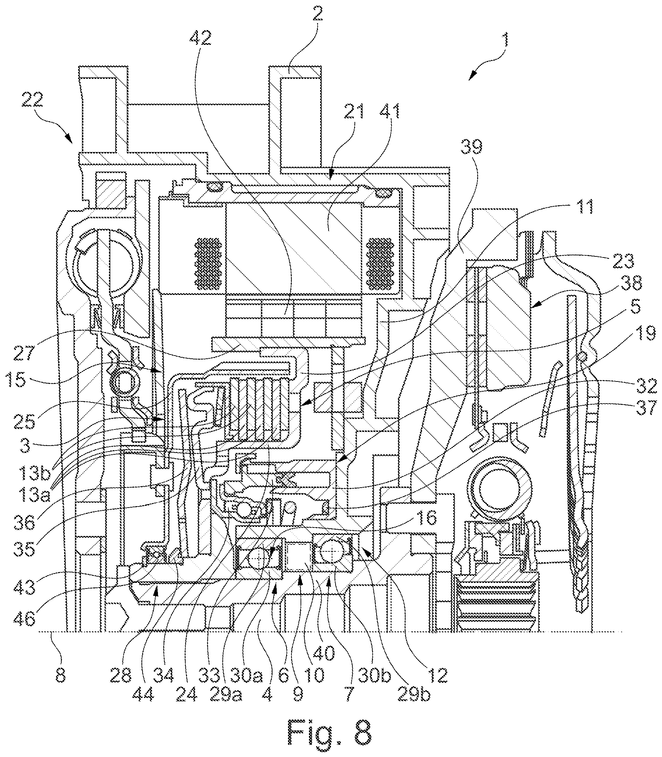

In Verbindung mit Fig. 8 ist des Weiteren auch möglich, das Hybridmodul 1 nicht nach dem achsparallelen Typ, sondern nach dem koaxialen Typ aufzubauen. In diesem Ausführungsbeispiel ist die elektrische Maschine 21 in dem Gehäuse 2 des Hybridmoduls 1 unmittelbar mit enthalten. Insbesondere sind ein Stator 41 und der mit diesem zusammenwirkende Rotor 42 der elektrischen Maschine 21 in dem Gehäuse 2 integriert. Der Rotor 42 ist unmittelbar auf dem Aufnahmebereich 27 des ersten Trägers 23 angebracht. Der erste Träger 23 bildet somit einen Rotorträger unmittelbar mit aus. Auch ist die Zwischenwelle 4 wie in den Fign. 6 und 7 mehrteilig ausgebildet. Die Gegendruckplatte 39 ist wiederum mit dem Grundkörper 40 drehfest verbunden. Zudem ist der in dem Aufnahmeraum 9 aufgenommene Sensor 17 als ein Resolver ausgebildet.

In anderen Worten ausgedrückt, wird erfindungsgemäß der Bauraum (Aufnahmeraum 9) zwischen den Stützlagern 6, 7 der Zwischenwelle 4 für die Mess-Sensorik (Sensoreinrichtung 10) genutzt. Dieser Bauraum 9 hat den Vorteil, dass verschiedenste Sensorik an dieser Stelle eingebaut werden kann. Dies können zum Beispiel Sensoren 17 für Drehzahl, Temperatur (vorzugsweise zur Lagerüberwachung), Drehmoment, Position (Resolver) oder ähnliches sein. Durch die Einbauposition der Sensorik 10 kann sowohl kabellose Sensorik 10, wie auch Sensorik 10 mit Kabeln 18 verbaut werden, da diese über die Zwischenwand 11 "nach außen" geführt werden können. Es sind sowohl radial wie auch axial arbeitende Systeme denkbar. Des Weiteren ist der Einbauort (Aufnahmeraum 9) ideal gegen Verschmutzung geschützt. Im vorliegenden Fall sei insbesondere die Möglichkeit hervorgehoben, den Resolver (Sensor 17) für eine koaxial angeordnete E-Maschine 21, der bisher sehr viel Bauraum an einer ungünstigen Stelle belegt, an den genannten Einbauort 9 zu verlagern. Die Einbauposition für die Mess-Sensorik 10 ist sowohl für koaxial angeordnete Hybrid-Module 1 wie auch für achsparallele Anordnungen geeignet. Außerdem ist sie ebenso für 48V-Systeme wie für Hochvolt-Systeme geeignet.

Prinzipiell dient in einem bevorzugten Ausführungsbeispiel als Ausgangsbasis eine K0-Kupplung / Motor-Trenn-Kupplung (erste Trennkupplung 3), die normal geschlossen ist. Die Ausführung dieser Kupplung 3 als trockene Lamellenkupplung oder Nasskupplung ist entsprechend möglich. Die E-Maschine ist achsparallel angeordnet und bspw. über einen Riementrieb, Kettentrieb, etc. mit der K0 3 gekoppelt. Ein Rotor-/Riemenscheiben-Träger (erster Träger 23) der K0 3 ist zugleich als Innenlamellen-Träger ausgeführt. Der Träger 23 ist zudem vorteilhafterweise mit geformten Lamellen-Verzahnungen ausgebildet. Das Lamellen-Paket (Gesamtheit aus ersten und zweiten Reibelementen 13a, 13b) der K0 3 ist per Tellerfeder 36 vorgespannt, ggfls. inklusive Modulationsfeder. Die Betätigung der K0 3 erfolgt bevorzugt mittels eines Ringkolben-CSC (Nehmerzylinder 19). Hierin ist weiter bevorzugt eine Lager-Vorlastfeder vorhanden. Auch eine koaxiale E-Maschine 21 ist entsprechend möglich. Das ZMS (Zweimassenschwungrad 22) weist vorzugsweise einen Flansch ohne oder mit Verspanneinrichtung auf.

Das Bezugszeichen 25 bezeichnet einen einteilig ausgeführten Außenlamellenträger. Das Bezugszeichen 2 bezeichnet einen Sicherungsring 43 zum Abstützen eines Lagers 46 des Außenlamellenträgers 25 und eines Tellerfeder-Stützblechs 44. Das Bezugszeichen 39 bezeichnet ein Schwungrad, das einteilig mit einem Flansch und einer Verzahnung für eine Verbindung zu einer Welle (Zwischenwelle 4) ausgebildet ist. Das Bezugszeichen 36 bezeichnet eine Tellerfeder, die einen Durchmesser aufweist, der kleiner als ein Innendurchmesser einer Mitnehmerverzahnung ist. Das Bezugszeichen 4 bezeichnet eine Welle, die als Hohlwelle oder Vollwelle ausgeführt sein kann. Das Bezugszeichen 11 bezeichnet eine Zwischenwand, die Durchstellungen 45 mit einem Gewinde zum Verschrauben an einem Gehäuse 2 aufweist.

### Bezugszeichenliste

- 1: Hybridmodul
- 2: Gehäuse
- 3: erste Trennkupplung
- 4: Zwischenwelle
- 5: erster Drehbestandteil
- 6: erstes Stützlager
- 7: zweites Stützlager
- 8: Drehachse
- 9: Aufnahmeraum
- 10: Sensoreinrichtung
- 11: Zwischenwand
- 12: Innenseite der Zwischenwand
- 13a: erstes Reibelement
- 13b: zweites Reibelement
- 14: Hülsenbereich
- 15: zweiter Drehbestandteil
- 16: Außenseite der Zwischenwelle
- 17: Sensor
- 18: Kabel
- 19: Nehmerzylinder
- 20: Ausgangswelle
- 21: elektrische Maschine
- 22: Zweimassenschwungrad
- 23: erster Träger
- 24: Tragbereich
- 25: zweiter Träger
- 26: Zugmittel
- 27: Aufnahmebereich
- 28: Kerbverzahnung
- 29a: Lageraußenring des ersten Stützlagers
- 29b: Lageraußenring des zweiten Stützlagers

- 30a: Lagerinnenring des ersten Stützlagers
- 30b: Lagerinnenring des zweiten Stützlagers
- 31: Geber
- 32: Zylindergehäuse
- 33: Kolben
- 34: Betätigungslager
- 35: Drucktopf
- 36: Tellerfeder
- 37: Vorlastfeder
- 38: Kupplung
- 39: Gegendruckplatte
- 40: Grundkörper
- 41: Stator
- 42: Rotor
- 43: Sicherungsring
- 44: Stützblech
- 45: Durchstellung
- 46: Lager

## Patentansprüche

1. Hybridmodul (1) für einen Antriebsstrang eines Kraftfahrzeuges, mit einem Gehäuse (2), einer Trennkupplung (3) sowie einer Zwischenwelle (4), wobei ein mit einer elektrischen Maschine gekoppelter oder koppelbarer Drehbestandteil (5) der Trennkupplung (3) drehfest mit der Zwischenwelle (4) verbunden ist und die Zwischenwelle (4) relativ zu dem Gehäuse (2) mittels zweier Stützlager (6, 7) um eine Drehachse (8) rotierbar gelagert ist, wobei die Stützlager (6, 7) derart in axialer Richtung beabstandet zueinander angeordnet sind, dass axial zwischen ihnen ein Aufnahmeraum (9) gebildet ist, wobei in dem Aufnahmeraum (9) zumindest ein Teil einer Sensoreinrichtung (10) angeordnet ist, **dadurch gekennzeichnet, dass** das Gehäuse (2) eine in radialer Richtung verlaufende Zwischenwand (11) aufweist und an einer radialen Innenseite (12) der Zwischenwand (11) die beiden Stützlager (6, 7) aufgenommen sind und die Zwischenwand (11) einen radial innerhalb mehrerer Reibelemente (13a, 13b) der Trennkupplung (3) angeordneten Hülsenbereich (14) aufweist, wobei an einer radialen Innenseite (12) des Hülsenbereiches (14) die Stützlager (6, 7) aufgenommen sind.

2. Hybridmodul (1) nach Anspruch 1, **dadurch gekennzeichnet, dass** die Stützlager (6, 7) an einer radialen Außenseite (16) der als Hohlwelle oder Vollwelle ausgebildeten Zwischenwelle (4) angeordnet sind.

3. Hybridmodul (1) nach einem der Ansprüche 1 bis 2, **dadurch gekennzeichnet, dass** zumindest ein Sensor (17) der Sensoreinrichtung (10) in dem Aufnahmeraum (9) angeordnet ist.

4. Hybridmodul (1) nach Anspruch 3, **dadurch gekennzeichnet, dass** der zumindest eine Sensor (17) zum Erfassen einer Drehzahl, einer Temperatur, eines Drehmoments und/oder einer Position ausgebildet ist.

5. Hybridmodul (1) nach Anspruch 3 oder 4, **dadurch gekennzeichnet, dass** der zumindest eine Sensor (17) mittels einer kabellosen Verbindung oder eine kabelgebundenen Verbindung mit einer Auswerteeinheit der Sensoreinrichtung verbunden ist.

6. Hybridmodul (1) nach einem der Ansprüche 1 bis 5, **dadurch gekennzeichnet, dass** die Stützlager (6, 7) unterschiedliche Durchmesser aufweisen.

7. Hybridmodul (1) nach einem der Ansprüche 1 bis 6, **dadurch gekennzeichnet, dass** ein zum Betätigen der Trennkupplung (3) eingesetzter Nehmerzylinder (19) radial zwischen den Stützlagern (6, 7) und mehreren Reibelementen (13a, 13b) der Trennkupplung (3) positioniert ist.

8. Hybridantriebsstrang für ein Kraftfahrzeug, mit einem Hybridmodul (1) nach zumindest einem der Ansprüche 1 bis 7.

## Claims

1. A hybrid module (1) for a powertrain of a motor vehicle, comprising a housing (2), a separating clutch (3) and an intermediate shaft (4), a rotary component (5) of the separating clutch (3), which rotary component is coupled or can be coupled to an electric machine, being non-rotatably connected to the intermediate shaft (4) and the intermediate shaft (4) being rotatably mounted about an axis of rotation (8) relative to the housing (2) by means of two support bearings (6, 7), the support bearings (6, 7) being arranged to be spaced apart from one another in the axial direction such that a receiving space (9) is formed axially between them, with at least one part of a sensor device (10) being arranged in the receiving space (9), **characterised in that** the housing (2) has an intermediate wall (11) extending in the radial direction and the two support bearings (6, 7) are received on a radial inner side (12) of the intermediate wall (11) and the intermediate wall (11) has a sleeve area (14) arranged radially inside a plurality of friction elements (13a, 13b) of the separating clutch (3), wherein the support bearings (6, 7) are received on a radial inner side (12) of the sleeve area (14).

2. The hybrid module (1) according to claim 1, **characterised in that** the support bearings (6, 7) are arranged on a radial outer side (16) of the intermediate shaft (4), which is designed as a hollow shaft or solid shaft.

3. The hybrid module (1) according to any one of claims 1 to 2, **characterised in that** at least one sensor (17) of the sensor device (10) is arranged in the receiving space (9).

4. The hybrid module (1) according to claim 3, **characterised in that** the at least one sensor (17) is designed to detect a speed, a temperature, a torque and/or a position.

5. The hybrid module (1) according to claim 3 or 4, **characterised in that** the at least one sensor (17) is connected to an evaluation unit of the sensor device by means of a wireless connection or a wired connection.

6. The hybrid module (1) according to any one of claims 1 to 5, **characterised in that** the support bearings (6, 7) have different diameters.

7. The hybrid module (1) according to any one of claims 1 to 6, **characterised in that** a slave cylinder (19) used to actuate the separating clutch (3) is positioned radially between the support bearings (6, 7) and a plurality of friction elements (13a, 13b) of the separating clutch (3).

8. A hybrid powertrain for a motor vehicle, comprising a hybrid module (1) according to at least one of claims 1 to 7.

## Revendications

1. Module hybride (1) pour une chaîne de traction d'un véhicule à moteur, comprenant un carter (2), un embrayage de coupure (3) ainsi qu'un arbre intermédiaire (4), un élément rotatif (5) de l'embrayage de coupure (3) relié ou pouvant être relié à une machine électrique étant assemblé en rotation à l'arbre intermédiaire (4) et l'arbre intermédiaire (4) étant logé de manière mobile en rotation par rapport au carter (2) autour d'un axe de rotation (8) au moyen de deux paliers supports (6, 7), les paliers supports (6, 7) étant disposés à une certaine distance l'un de l'autre dans le sens axial de sorte à ménager entre eux un logement (9) dans le sens axial, au moins une partie d'un dispositif de détection (10) étant disposée dans le logement (9), **caractérisé en ce que** le carter (2) présente une paroi intermédiaire (11) s'étendant dans le sens radial et **en ce que** les deux paliers supports (6, 7) sont reçus au niveau d'une face intérieure radiale (12) de la paroi intermédiaire (11) et **en ce que** la paroi intermédiaire (11) présente une zone manchon (14) disposée radialement à l'intérieur de plusieurs éléments de friction (13a, 13b) de l'embrayage de coupure (3), les paliers supports (6, 7) étant reçus au niveau d'une face intérieure radiale (12) de la zone manchon (14).

2. Module hybride (1) selon la revendication 1, **caractérisé en ce que** les paliers supports (6, 7) sont disposés au niveau d'une face extérieure radiale (16) de l'arbre intermédiaire (4) en forme d'arbre creux ou d'arbre plein.

3. Module hybride (1) selon l'une quelconque des revendications 1 à 2, **caractérisé en ce qu'**au moins un capteur (17) du dispositif de détection (10) est disposé dans le logement (9).

4. Module hybride (1) selon la revendication 3, **caractérisé en ce qu'**au moins un capteur (17) est conçu pour détecter une vitesse de rotation, une température, un couple et/ou une position.

5. Module hybride (1) selon la revendication 3 ou 4, **caractérisé en ce qu'**au moins un capteur (17) est connecté à une unité d'analyse du dispositif de détection au moyen d'une connexion sans fil ou d'une connexion filaire.

6. Module hybride (1) selon l'une quelconque des revendications 1 à 5, **caractérisé en ce que** les paliers supports (6, 7) présentent un diamètre différent.

7. Module hybride (1) selon l'une quelconque des revendications 1 à 6, **caractérisé en ce qu'**un cylindre récepteur (19) servant à actionner l'embrayage de coupure (3) est positionné dans le sens radial entre les paliers supports (6, 7) et une pluralité d'éléments de friction (13a, 13b) de l'embrayage de coupure (3).

8. Chaîne de traction hybride d'un véhicule à moteur comprenant un module hybride (1) selon au moins l'une quelconque des revendications 1 à 7.
